# EUROPÄISCHE PATENTSCHRIFT

(11) **EP 0 621 170 B1**
(45) Veröffentlichungstag und Bekanntmachung des Hinweises auf die Patenterteilung: **24.04.1996**
(21) Anmeldenummer: 94103382.1
(22) Anmeldetag: 07.03.1994
(51) Int. Cl.: B62D 33/06

(54) **Vordere Lageranordnung für das Fahrerhaus eines Lastkraftwagens**
Front mounting arrangement for the driver's cab of a lorry
Aménagement d'un support avant pour une cabine de conducteur d'un camion

(30) Priorität: 19.04.1993 AT 763/93
(43) Veröffentlichungstag der Anmeldung: 26.10.1994
(73) Patentinhaber: STEYR Nutzfahrzeuge AG, A-4400 Steyr (AT)
(72) Erfinder: Wenzl, Kurt, Dipl.-Ing., A-4048 Puchenau (AT); Burgholzer, Johann, A-4442 Kleinraming (AT)

(56) Entgegenhaltungen:
- DE-A- 2 553 822

## Beschreibung

Die Erfindung betrifft eine vordere Lageranordnung für das Fahrerhaus eines Lastkraftwagen, mit wenigstens Zwei am Fahrzeugrahmen befestigten Lagerkonsolen, an denen das Fahrerhaus vorn über entsprechende Lager kippbar angelenkt ist.

Aus der DE-A-25 53 822 ist ein Traktor bekannt, dessen hinter dem Motor-Block angeordnete Fahrerkabine oder Überrollbügel bodenseitig über spezielle Lager abgestützt ist. Diese sind dahingehend gestaltet, bei einem Überschlag des Traktors einen Großteil der dabei auftretenden Kräfte aufnehmen zu können. Dabei ist je Lagerstelle ein am Faherhausboden befestigtes elastisches Element vorgesehen, das unten in einem am Traktor-Fahrgestell befestigten Lagerbock, in diesen von oben her eintretend, abgestützt ist. Der Lagerbock ist bügelförmig ausgebildet und - im Hinblick auf Energieverzehrung bei einem Traktor-Überschlag - auf plastische Verformung ausgelegt.

Für die Lagerung, noch dazu die vordere, eines kippbaren Fahrerhauses eines Lastkraftwagen wäre diese bekannte Traktor-Lageranordnung nicht verwendbar, denn dort treten bauart- und konstruktionsbedingt andere Probleme auf, die es zu beherrschen/überwinden gilt. Normalerweise sind die vorderen Lagerkonsolen von kippbaren Fahrerhäusern am Frontlenker-Lastkraftwagen konstruktiv auf eine solche Stabilität ausgelegt, daß sie die normalen, im Fahrbetrieb auftretenden Längs-, Quer- und Vertikalkräfte sicher aufnehmen können. Bestimmte Länder jedoch, insbesondere Schweden, verlangen darüber hinausgehende Anforderungen an eine solche Fahrerhaus-Lagerung, die in gezielten Testreihen unter Beweis gestellt werden müssen. Beispielsweise werden beim sogenannten Schwedentest die Fahrerhäuser nacheinander mit einer Vertikalkraft (Dachlast) und einer von vorne bzw. hinten wirkenden Längskraft (Pendelschlag) beaufschlagt, wobei die Lagerkonsolen auch unter diesen enormen Beanspruchungskräften nicht zu Bruch gehen dürfen. Insbesondere im Hinblick auf die Beherrschung dieser enormen Versuchskräfte ausgelegt sind die solchermaßen beanspruchten Lagerkonsolen relativ aufwendig gestaltet und damit vergleichsweise teuer.

Es ist daher Aufgabe der Erfindung, die Lageranordnung für das kippbare Fahrerhaus eines Lastkraftwagens dahingehend auszubilden, daß sie mit vergleichsweise einfach und billig herstellbaren Lagerkonsolen auskommt und diese trotzdem die Bedingungen des sogenannten Schwedentestes erfüllen.

Diese Aufgabe ist erfindungsgemäß durch Lagerkonsolen mit den im Kennzeichen des Anspruches 1 angegebenen Merkmalen gelöst.

Jeder der erfindungsgemäßen Lagerkonsolen sind dabei konstruktiv zwei definierte Verformungszonen aufgeprägt, die in der Lage sind, die während eines Schwedentests einwirkenden extrem hohen Horizontal- und Vertikalkräfte in entsprechende Verformungsarbeit umzusetzen, ohne dabei zu Bruch zu gehen. Diese Eigenschaften werden zudem mit vergleichsweise einfach und billig herstellbaren sowie im Falle einer Beschädigung leicht auswechselbaren Lagerkonsolen sichergestellt.

Vorteilhafte Einzelheiten und Ausgestaltungen der erfindungsgemäßen Lagerkonsolen sind in den Unteransprüchen angegeben.

Nachstehend ist eine Ausführungsform einer erfindungsgemäßen Lagerkonsole anhand der Zeichnung näher erläutert. In der Zeichnung zeigen:

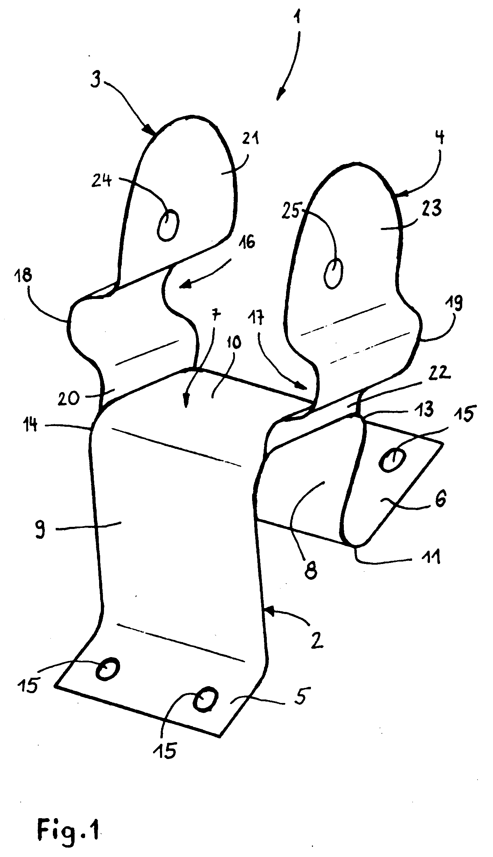

- Fig. 1: eine weitgehend schematisiert dargestellte Lagerkonsole erfindungsgemäßer Bauart in Ansicht von schräg hinten oben,
- Fig.2: eine Seitenansicht der Lagerkonsole gemäß Fig. 1,
- Fig. 3: die Lagerkonsole gemäß Fig. 1 und 2 in Vorderansicht,
- Fig. 4: die Verformungsmoglichkeiten der erfindungsgemäßen Lagerkonsolen bei frontaler Krafteinwirkung, und
- Fig. 5: die Verformungsmöglichkeiten der erfindungsgemäßen Lagerkonsolen bei vertikal von oben nach unten gerichteter Krafteinwirkung.

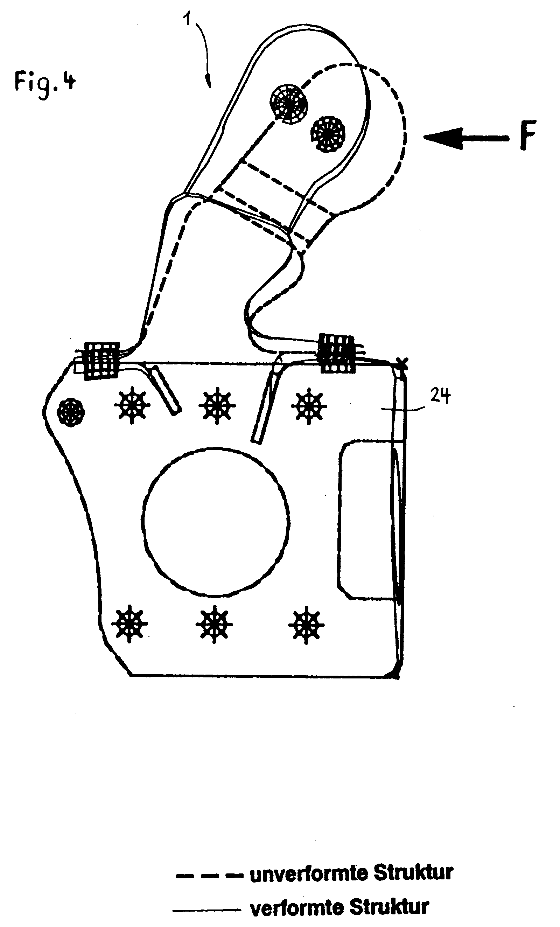

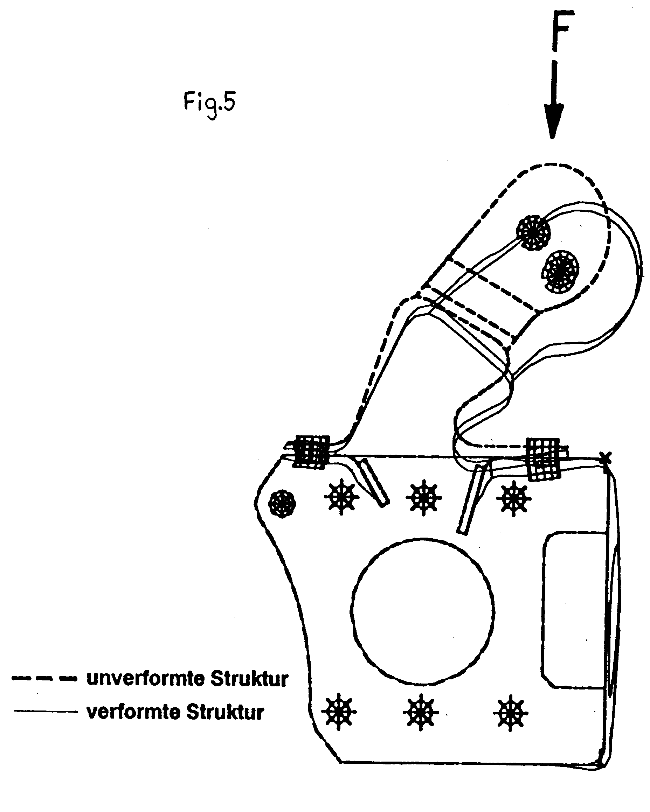

Eine in der Zeichnung mit 1 bezeichnete Lagerkonsole ist aus drei Einzelteilen zusammengesetzt, nämlich einem Lagerbügel 2 und zwei Seitenwangen 3, 4. Der Lagerbügel 2 weist unten zwei vorzugsweise in einer Ebene liegende, am Fahrzeugrahmen abgestützt anschraubbare Befestigungsstege 5, 6 und dazwischen einen hochgezogenen Bereich 7 mit - von der Seite gesehen - etwa U-förmigem Profil auf. Dieser hochgezogene Bereich 7 bildet am Lagerbügel 2 jenen in Fahrzeuglängsrichtung bei Krafteinwirkung von vorn, hinten und oben gezielt nach hinten und unten (wie aus Fig. 4 und 5 ersichtlich) verformbaren Abschnitt. Dieser U-förmig hochgezogene Bereich 7 besteht aus einem vorderen Schenkel 8, einem hinteren Schenket 9 und einem Dach 10. Im dargestellten Ausführungsbeispiel ist der U-förmig hochgezogene Bereich 7 nach vorne gekippt, so daß dessen vorderer Schenkel 8 kürzer als der hintere Schenkel 9 ist. Beide Schenkel 8, 9 können entweder annähernd parallel zueinander oder - wie dargestellt - einen spitzen Winkel einschließend zueinander verlaufen. Im dargestellten Ausführungsbeispiel ist das im wesentlichen ebene Dach 10 des hochgezogenen Bereiches 7 schräg von vorn nach hinten ansteigend angeordnet und erstreckt sich zumindest annähernd senkrecht zum hinteren Schenkel 9. Die Neigung des hinteren Schenkels 9 nach vorne ist dabei so, daß dieser einen Winkel von etwa 75° zur Befestigungsebene einschließt. Die demgegenüber größere Neigung des vorderen Schenkels 8 ist so festgelegt, daß dieser einen Winkel von etwa 45° mit der Befestigungsebene einschließt. Jeder der beiden Schenkel 8, 9 des U-förmig hochgezogenen Bereiches 7 geht über einen Bogen 11, 12, 13, 14 mit relativ großem Radius in den Befestigungssteg 5 bzw. 6 sowie das Dach 10 über, wobei die Bögen 11, 12 die besonders verformbaren Zonen des Lagerbügels 2 bei frontaler und vertikaler Krafteinwirkung bilden.

Der Lagerbügel 2 ist einteilig ausgebildet und entweder durch ein Biegeteil aus Bandstahl oder durch Absägen von einem seine Endform aufweisenden Stahlstrangprofil realisierbar. Die Bohrungen 15 in den Befestigungsstegen 5, 6 dienen zur Hindurchführung von Schrauben für die Befestigung einer Lagerkonsole 1 am Fahrzeugrahmen.

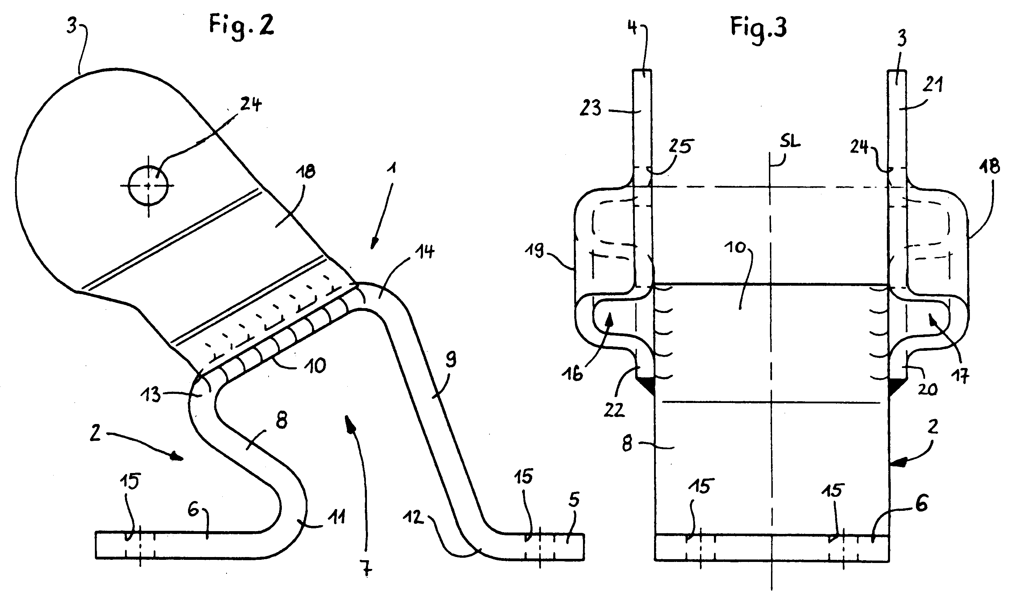

Die beiden Seitenwangen 3, 4 einer Lagerkonsole 1 sind zur Längsmittelebene SL (Fig. 3) des Lagerbügels 2 spiegelsymmetrisch ausgebildet und am Dach 10 des hochgezogenen Lagerbügel-Bereiches 7, dort entweder oben oder seitlich außen an diesem anschließend, nach oben - und im Fall des dargestellten Beispiel schräg nach vorn - abragend angeschweißt. Die beiden Seitenwangen 3, 4 weisen vorgegebene Faltzonen 16 bzw. 17 auf, die jene Bereiche bilden, welche bei hoher Vertikalkrafteinwirkung von oben nach unten, aber bei Horizontalkrafteinwirkung auch in umgekehrter Richtung gezielt verformbar sind. Diese Faltzone 16 bzw. 17 in jeder Seitenwange 3, 4 ist durch eine über deren volle Breite und vorzugsweise nach außen gehende Ausbuchtung 18 bzw. 19 realisiert, wobei sich die an dieser Ausbuchtung 18 bzw. 19 oben und unten anschließenden Seitenwangen-Abschnitte 20, 21 bzw. 22, 23 vorzugsweise jeweils in einer Ebene erstrecken. Im dargestellten Ausführungsbeispiel verlaufen die Ausbuchtungen 18 bzw. 19 in jeder der beiden Seitenwangen 3, 4 zumindest annähernd parallel zum Dach 10 des hochgezogenen Lagerbügel-Bereiches 7. Die beiden Seitenwangen 3, 4 sind aus Stahlblech vorzugsweise ausgestanzt und formgepreßt. Die an einer fertigen Lagerkonsole 1 in beiden Seitenwangen 3, 4 zueinander fluchtend gegebenen Durchgangsbohrungen 24, 25 dienen zur Durchführung einer Spannschraube, über welche ein nicht dargestelltes Lager zwischen den oberen Abschnitten 21, 23 der beiden Seitenwangen 3, 4 festspannbar ist. Über dieses Lager ist ein ebenfalls nicht dargestelltes kippbares Fahrerhaus des Lastkraftwagens schwenkbar an derjeweiligen Lagerkonsole 1 angelenkt.

Die Figuren 4 und 5 zeigen jeweils Computerbilder aus einer Schwedentest-Simulation, aus denen die Formänderungen der am Fahrzeugrahmen 24 befestigten Lagerkonsolen 1 bei Einwirkung einer vorgegebenen Frontalkraft (Fig. 4) bzw. Vertikalkraft (Fig. 5) in der Größenordnung von F = 10 kN (Einheitskraft für FE-Berechnung) ersichtlich sind. Dabei ist die unverformte Struktur der Lagerkonsole 1 jeweils gestrichelt, die verformte Struktur dagegen jeweils durch ausgezogene Linien dargestellt.

Aus Fig. 4 wird deutlich, daß sich die Lagerkonsolen 1 bei frontal einwirkender Kraft F hauptsächlich im Bereich des Lagerbügels 2 verformen, dieser dabei nach hinten gekippt wird bzw. sich im dargestellten Beispiel etwas aufrichtet. Die Seitenwangen 3, 4 bilden dabei die Hebelarme für die Kraftübertragung und verändern ihre Form und Lage in Bezug auf das Lagerbügel-Dach 10 durch Aufziehen der Faltarme 16, 17 im vorderen Bereich. Bei einer Einwirkung der Kraft F von oben nach unten dagegen, wie aus Fig. 5 ersichtlich, werden die beiden Seitenwangen 3, 4 im Bereich ihrer konstruktiv vorgegebene Faltzonen 16, 17 gezielt verformt. Im dargestellten Ausführungsbeispiel geht dies einher mit einer gezielten Verformung auch des Lagerbügels 2, der dabei geringfügig nach vorne gekippt wird.

Aus den Darstellungen der Figuren 4 und 5 geht mithin sehr augenscheinlich hervor, daß die erfindungsgemäßen Lagerkonsolen 1 auch den extrem hohen Beanspruchungen des Schwedentestes sicher standhalten und sich dabei lediglich in Grenzen gehaltene Formveränderungen in den Lagerkonsolen 1 ohne Risse oder Brüche in diesen einstellen. Das heißt, das Fahrerhaus bleibt auch bei einer Frontalkollision oder einem Überschlag des Fahrzeugs sicher über die Lagerkonsolen 1 am Fahrzeugrahmen gehalten.

## Patentansprüche

1. Vordere Lageranordnung für das Fahrerhaus eines Lastkraftwagens, mit wenigstens zwei am Fahrzeugrahmen befestigten Lagerkonsolen, an denen das Fahrerhaus vorn über entsprechende Lager kippbar angelenkt ist, dadurch gekennzeichnet, daß jede der Lagerkonsolen (1) aus einem Lagerbügel (2) mit hochgezogenem Bereich (7; 8, 9, 10), der bei hoher Krafteinwirkung von vorn, hinten und oben gezielt verformbar ist, und zwei oben am hochgezogenen Lagerbügel-Bereich (7) angeschlossenen Seitenwangen (3, 4) besteht, zwischen denen ein Fahrerhaus-Lager aufgenommen ist und die vorgegebene Faltzonen (16, 17) aufweisen, die bei hoher Krafteinwirkung von oben nach unten bzw. umgekehrt gezielt verformbar sind.

2. Lageranordnung nach Anspruch 1, dadurch gekennzeichnet, daß der Lagerbügel (2) jeder Lagerkonsole (1) einteilig ausgebildet ist und unten zwei vorzugsweise in einer Ebene liegende, am Fahrzeugrahmen abgestützt anschraubbare Befestigungsstege (5, 6) und dazwischen - als den gezielt verformbaren Abschnitt - den hochgezogenen Bereich (7) mit - von der Seite gesehen - etwa U-förmigem Profil mit einem vorderen Schenkel (8), einem hinteren Schenkel (9) und einem Dach (10) aufweist.

3. Lageranordnung nach einem der Ansprüche 1 und 2, dadurch gekennzeichnet, daß beide Schenkel (8, 9) des U-förmig hochgezogenen Lagerbügel-Bereiches (7) annähernd parallel zueinander verlaufen.

4. Lageranordnung nach einem der Ansprüche 1 und 2, dadurch gekennzeichnet, daß der hochgezogene Lagerbügel-Bereich (7) bezüglich der Befestigungsebene nach vorne gekippt ist.

5. Lageranordnung nach Anspruch 4, dadurch gekennzeichnet, daß der vordere Schenkel (8) des U-förmig hochgezogenen Lagerbügel-Bereiches (7) kürzer als dessen hinterer Schenkel (9) ist.

6. Lageranordnung nach einem der Ansprüche 3 und 4, dadurch gekennzeichnet, daß die beiden Schenkel (8, 9) des U-förmig hochgezogenen Lagerbügel-Bereiches (7) einen spitzen Winkel einschließend zueinander verlaufen.

7. Lageranordnung nach einem der vorhergehenden Ansprüche, dadurch gekennzeichnet, daß das Dach (10) des U-förmig hochgezogenen Lagerbügel-Bereiches (7) sich annähernd senkrecht zu dessen hinterem Schenkel (9) erstreckt.

8. Lageranordnung nach Anspruch 6, dadurch gekennzeichnet, daß der hintere Schenkel (9) des nach vorn gekippten U-förmigen Lagerbügel-Bereiches (7) einen Winkel von etwa 75°, der vordere Schenkel (8) dagegen einen Winkel von etwa 45° mit der Befestigungsebene einschließt.

9. Lageranordnung nach einem der vorhergehenden Ansprüche, dadurch gekennzeichnet, daß jeder Schenkel (8, 9) des U-förmig hochgezogenen Lagerbügel-Bereiches (7) mit einem Bogen (11, 12, 13, 14) mit relativ großem Krümmungsradius in den Befestigungssteg (5, 6) sowie das Dach (10) übergeht.

10. Lageranordnung nach einem der vorhergehenden Ansprüche, dadurch gekennzeichnet, daß der Lagerbügel (2) einer Lagerkonsole (1) durch ein Biegeteil aus Bandstahl realisiert ist.

11. Lageranordnung nach einem der Ansprüche 1 bis 9, dadurch gekennzeichnet, daß der Lagerbügel (2) einer Lagerkonsole (1) durch Absägen von einem seine Endform aufweisenden Stahlstrangprofil realisierbar ist.

12. Lageranordnung nach Anspruch 1, dadurch gekennzeichnet, daß die beiden Seitenwangen (3, 4) einer Lagerkonsole (1) spiegelsymmetrisch zur Längsmittelebene (SL) des Lagerbügels (2) ausgebildet und angeordnet sind.

13. Lageranordnung nach Anspruch 1, dadurch gekennzeichnet, daß die beiden Seitenwangen (3, 4) einer Lagerkonsole (1) am Dach (10) des U-förmig hochgezogenen Lagerbügel-Bereiches (7) oben oder seitlich außen an diesem anschließend nach oben und gegebenenfalls schräg vorn abragend angeschweißt sind.

14. Lageranordnung nach Anspruch 1, dadurch gekennzeichnet, daß die Faltzone (16, 17) in jeder Seitenwange (3, 4) durch eine über deren volle Breite gehende Ausbuchtung (18, 19) realisiert ist.

15. Lageranordnung nach Anspruch 14, dadurch gekennzeichnet, daß die Ausbuchtungen (16, 17) in beiden Seitenwangen (3, 4) einer Lagerkonsole (1) zumindest annähernd parallel zum Dach (10) des U-förmig hochgezogenen Lagerbügel-Bereiches (7) verlaufen.

16. Lageranordnung nach einem der Ansprüche 14 und 15, dadurch gekennzeichnet, daß die Ausbuchtungen (16, 17) in beiden Seitenwangen (3, 4) einer Lagerkonsole (1) jeweils nach außen gehen.

17. Lageranordnung nach einem der Ansprüche 14 bis 16, dadurch gekennzeichnet, daß sich die oben und unten an der jeweiligen Ausbuchtung (16, 17) einer Seitenwange (3, 4) anschließenden Abschnitte (20, 21 bzw. 22, 23) in einer Ebene erstrecken.

18. Lageranordnung nach einem der Ansprüche 12 bis 17, dadurch gekennzeichnet, daß die beiden Seitenwangen (3, 4) einer Lagerkonsole (1) aus Stahlblech ausgestanzt und formgepreßt sind.

## Claims

1. Mounts arrangement at front for the cab of a truck with at least two mount consoles fitted to the vehicle frame, at which consoles the cab can be tilted at the front of by means of suitable mounts, characterised in that each of the mount consoles (1) consists of a mount bow (2) with a raised area (7; 8, 9, 10) that can be purposefully deformed if force is exerted on it from the front, rear and top, and of two lateral faces (3, 4) that are fitted to the top of the raised mount bow area (7), accommodate a cab mount between them and have specified folding zones (16, 17) which, upon the impact of great force from the top downwards and vice versa, can be purposefully deformed.

2. Mounts arrangement according to Claim 1, characterised in that the mount bow (2) of each mount console (1) is made of one single piece and provided at the bottom with two mounting webs (5, 6) which are preferably in the same plane, supported on the vehicle frame and can be screwed on, and is also provided between said mounting webs (5, 6) with the raised area (7) which can be purposefully deformed and is equipped with a front leg (8) which, when viewed from the side, is approximately U-shaped, and with a rear leg (9) and a roof (10).

3. Mounts arrangement according to one of the Claims 1 and 2, characterised in that the two legs (8, 9) of the U-shaped raised mount bow area (7) run approximately parallel to each other.

4. Mounts arrangement according to one of the Claims 1 and 2, characterised in that the raised mount bow area (7) is tilted forwards in relation to the mounting plane.

5. Mounts arrangement according to Claim 4, characterised in that the front leg (8) of the U-shaped raised mount bow area (7) is shorter than the rear leg (9) of said mount bow area.

6. Mounts arrangement according to one of the Claims 3 and 4, characterised in that the two legs (8, 9) of the U-shaped raised mount bow area (7) run together at an acute angle.

7. Mounts arrangement according to one of the foregoing Claims, characterised in that the roof (10) of the U-shaped raised mount bow area (7) is approximately vertical relative to the rear leg (9) of said mount bow area.

8. Mounts arrangement according to Claim 6, characterised in that, relative to the mounting plane, the rear leg (9) of the forward-tilting U-shaped mount bow area (7) is at an angle of approximately 75°, whereas the front leg (8) is at an angle of approximately 45°.

9. Mounts arrangement according to one of the foregoing Claims, characterised in that the transitions from each leg (8, 9) of the U-shaped raised mount bow area (7) to the mounting web (5, 6) and the roof (10) are arcs (11, 12, 13, 14) with a relatively large curvature radius.

10. Mounts arrangement according to one of the foregoing Claims, characterised in that the mounts bow (2) of one mount console (1) is formed by a bending part of strip steel.

11. Mounts arrangement according to one of the Claims 1 to 9, characterised in that the mount bow (2) of one mount console (1) can be formed by a part sawn off a sectional steel piece that has the final shape of said mounts bow (2).

12. Mounts arrangement according to Claim 1, characterised in that the two lateral faces (3, 4) of one mount console (1) are formed and arranged in a mirror-symmetrical manner relative to the longitudinal centre plane (SL) of the mount bow (2).

13. Mounts arrangement according to Claim 1, characterised in that, on the roof (10) of the U-shaped, raised mount bow area (7), the two lateral faces (3, 4) of one mount console (1) are welded to the top area or to the outer sides of said mount bow area (7) so that they point upwards and, if necessary, forwards at an oblique angle.

14. Mounts arrangement according to Claim 1, characterised in that the folding zone (16, 17) in each literal face (3, 4) is formed by a bulge (18, 19) that extends over the full width of said faces (3, 4).

15. Mounts arrangement according to Claim 14, characterised in that the bulges (16, 17) in both lateral faces (3, 4) of one mount console (1) run at least approximately parallel to the roof (10) of the U-shaped, raised mount bow area (7).

16. Mounts arrangement according to one of the Claims 14 and 15, characterised in that the bulges (16, 17) in both lateral faces (3, 4) of one mount console (1) curve outwards.

17. Mounts arrangement according to one of the Claims 14 to 16, characterised in that the sections (20, 21 and 22, 23 respectively) adjacent to the upper and lower ends of the respective bulge (16, 17) of one lateral face (3,4) are in the same plane.

18. Mounts arrangement according to one of the Claims 12 to 17, characterised in that the two lateral faces (3, 4) of one mount console (1) are punched out of sheet steel and formed by means of a press.

## Revendications

1. Système de montage antérieur pour la cabine du conducteur d'un camion, avec au moins deux consoles de montage fixées sur le châssis du véhicule, sur lesquelles la cabine du conducteur est articulée de façon à pouvoir basculer vers l'avant au moyen de paliers correspondants, système de montage caractérisé en ce que chacune des consoles de montage (1) consiste en un étrier de montage (2) avec une zone érigée verticalement (7, 8, 9, 10) qui peut se déformer intentionnellement vers l'avant, vers l'arrière et vers le bas lors d'un impact de forces élevé, et en deux joues latérales (3, 4) raccordées en haut sur la zone (7) de l'étrier de montage érigé verticalement, joues latérales entre lesquelles est reçu un palier de cabine de conducteur, et en ce que les consoles présentent des zones de pliage prédéfinies (16, 17) qui peuvent se déformer intentionnellement lors de l'impact de forces de haut en bas ou inversement.

2. Système de montage selon la revendication 1, caractérisé en ce que l'étrier de montage (2) de chaque console de montage (1) est constitué d'une seule pièce et présente en bas deux pattes de fixation (5, 6) qui peuvent être boulonnées en s'appuyant sur le châssis du véhicule en s'étendant de préférence dans un même plan, et présente entre ces pattes - en tant que section pouvant intentionnellement se déformer - la zone érigée verticalement (7) avec - vu de côté - un profil ayant à peu près la forme d'un U comportant une branche antérieure (8), une branche postérieure (9) et un toit (10).

3. Système de montage selon l'une des revendications 1 et 2, caractérisé en ce que les deux branches (8, 9) de la zone (7) de l'étrier de montage érigé verticalement en forme d'U, s'étendent à peu près parallèlement l'une à l'autre.

4. Système de montage selon l'une des revendications 1 et 2, caractérisé en ce que la zone (7) de l'étrier de montage érigé verticalement bascule vers l'avant par rapport au plan de fixation.

5. Système de montage selon la revendication 4, caractérisé en ce que la branche antérieure (8) de la zone (7) de l'étrier de montage érigée verticalement en forme d'U est plus courte que sa branche postérieure (9).

6. Système de montage selon l'une des revendications 3 et 4, caractérisé en ce que les deux branches (8, 9) de la zone (7) de l'étrier de montage érigé verticalement en forme d'U s'étendent l'une vers l'autre en formant un angle aigu.

7. Système de montage selon l'une des revendications précédentes, caractérisé en ce que le toit (10) de la zone (7) de l'étrier de montage érigé verticalement en forme d'U s'étend de façon approximativement perpendiculaire à sa branche arrière (9).

8. Système de montage selon la revendication 6, caractérisé en ce que la branche arrière (9) de la zone (7) de l'étrier de montage en forme d'U basculée vers l'avant, forme un angle d'environ 75° avec le plan de fixation, la branche avant (8) formant par contre un angle d'environ 45° par rapport au plan de fixation.

9. Système de montage selon l'une des revendications précédentes, caractérisé en ce que chaque branche (8, 9) de la zone (7) de l'étrier de montage érigé verticalement en forme d'U, se transforme, par l'intermédiaire d'un arc (11, 12, 13, 14) ayant un rayon de courbure relativement grand, en la patte de fixation (5, 6) ainsi que le toit (10).

10. Système de montage selon l'une des revendications précédentes, caractérisé en ce que l'étrier de montage (2) d'une console de montage (1) est réalisé au moyen d'une pièce flexible faite dans une bande d'acier.

11. Système de montage selon l'une des revendications 1 à 9, caractérisé en ce que l'étrier de montage (2) d'une console de montage (1) peut être réalisé en sciant un profilé en acier présentant sa forme finale.

12. Système de montage selon la revendication 1, caractérisé en ce que les deux joues latérales (3, 4) d'une console de montage (1) sont constituées et disposées de façon symétrique par rapport au plan médian longitudinal (SL) de l'étrier de montage (2).

13. Système de montage selon la revendication 1, caractérisé en ce que les deux joues latérales (3, 4) d'une console de montage (1) sont soudées sur le toit (10) de la zone (7) de l'étrier de montage érigé verticalement en forme d'U, en haut ou latéralement à l'extérieur, en se raccordant à cette zone vers le haut et, le cas échéant, en faisant saillie obliquement en avant.

14. Système de montage selon la revendication 1, caractérisé en ce que la zone de pliage (16, 17) est réalisée dans chaque joue latérale (3, 4) par une partie ventrue (18, 19) s'étendant sur toute sa largueur.

15. Système de montage selon la revendication 14, caractérisé en ce que les parties ventrues (16, 17) s'étendent dans les deux joues latérales (3, 4) d'une console de montage (1) de façon au moins approximativement parallèle au toit (10) de la zone (7) de l'étrier de montage érigé verticalement en forme d'U.

16. Système de montage selon l'une des revendications 14 et 15, caractérisé en ce que les parties ventrues (16, 17) vont respectivement vers l'extérieur dans les deux joues latérales (3, 4) d'une console de montage (1).

17. Système de montage selon l'une des revendications 14 à 16, caractérisé en ce que des sections (20, 21 ou 22, 23) se raccordant en haut et en bas à la partie ventrue correspondante (16, 17) d'une joue latérale (3, 4), s'étendent dans un plan.

18. Système de montage selon l'une des revendications 12 à 17, caractérisé en ce que les deux joues latérales (3, 4) d'une console de montage (1) sont estampées et mises en forme par pressage à partir d'une tôle d'acier.
